# EUROPEAN PATENT APPLICATION

(11) **EP 4 418 173 A1**
(43) Date of publication of application: **21.08.2024**
(21) Application number: 23315033.3
(22) Date of filing: 17.02.2023
(51) Int. Cl.: G06Q 10/04, G06Q 10/02, G06Q 30/06, G06Q 50/06

(54) **SYSTEM AND METHOD FOR RESPONDING TO FLEXIBILITY NEEDS TO BE EXPRESSED BY THIRD PARTIES REGARDING AN ELECTRICAL POWER GRID**

(71) Applicant: TotalEnergies OneTech, 92400 Courbevoie (FR)
(72) Inventor: Benamara, Marouane, 92400 Courbevoie (FR); Boissy, Alexandre, 92400 Courbevoie (FR); Bono, Maxime, 92400 Courbevoie (FR); Herrmann, Yann, 92400 Courbevoie (FR); Sanchez, Jérémie-Luc, 92400 Courbevoie (FR); Traore, Félix, 92400 Courbevoie (FR)
(74) Representative: Innovincia

(57) **Abstract**

System and method for responding to flexibility needs to be expressed by third parties regarding an electrical power grid. A dispatch engine (13) is able to control distributed energy resources according to a flexibility schedule (30b). A booking engine (14) performs operations of:
- interfacing with a third party's agent,
- receiving and storing a flexibility request provided by the third party's agent,
- checking the feasibility of the stored flexibility request with a flexibility schedule (30b) received from the forecast engine (15),
- in case of feasibility, triggering the controlling of the distributed energy resources by the dispatch engine (13) according to the flexibility schedule (30b),
- otherwise, declining the flexibility request.

A forecast engine (15) performs operations of:
- receiving a flexibility request from the booking engine (14),
- selecting a subset (26) of algorithms adapted to the type of flexibility request (30a) request and reading the subset (26) of computer-program codes (27) implementing said selected subset (26) of algorithms in said storage means (25),
- loading said subset (26) of computer-program codes (27) in the computer-readable medium,
- running the loaded subset (26) of computer-program codes (27),
- delivering to the booking engine (14) a flexibility schedule (30b) adapted to the request.

## Description

### Technical field

The technical field of the invention is electrical power grid management, and more specifically, electrical power grids connecting aggregated controllable distributed energy resources which can be controlled to provide flexibility under request.

### Background of the invention

From Autogrid^{®}, it is known to use different and distributed electrical devices connected to the electrical power grid as resources for giving back power to the grid. Some devices are used for their ability to deliver power, such as energy storage devices, or for their ability not to consume the available power at some times. This concept, known as a Virtual Power Plant, is self-defined as aggregating customer-owned flexible storage, distributed generation and demand-side resources to monetize in multiple energy markets and turn them into new revenues streams. The need for power is globally considered, and supply is permanently adjusted to demand. A global dispatch engine carries out this function of adjusting supply to demand.

From US2009326726A1, it is known to manage demand responses with a system including:
- a database to store demand response data, said demand response data including demand response agreement parameters, demand response load and energy demand characteristics of one or more demand response customers, said demand response load characteristics including power consumption capacity of each of one or more demand response loads,
- an aggregator to aggregate the demand response loads based on the demand response data and forecast data into a demand response portfolio,
- a monitor to monitor the power demand of one or more demand response customers and one or more power grids, and
- a dispatcher to notify one or more demand response customers of the demand response portfolio and to notify a utility of a response from one or more demand response customers whether to control the demand response load to return the power consumption capacity of the demand response load to the one or more power grids.

### Summary of the invention

The known dispatch engine is not adapted to a grid, for the existing dispatch engine does not consider specific data of the local resources when forecasting the opportunities of availability of power over the grid. So then, it is only possible to forecast an opportunity benefiting from optimised aggregated resources.

An object of the invention is a system for responding to flexibility needs to be expressed by third parties regarding an electrical power grid, having a dispatch engine able to control distributed energy resources according to a flexibility schedule, a booking engine, a forecasting engine, all connected for exchanging data, characterised in that the booking engine comprises a computer-readable medium with instructions encoded thereon and processors connected to the medium and configured to, when executing the instructions, perform operations of:
- interfacing with a third party's agent,
- receiving and storing a flexibility request provided by the third party's agent,
- checking the feasibility of the stored flexibility request with a flexibility schedule received from the forecast engine,
- in case of feasibility, triggering the controlling of the distributed energy resources by the dispatch engine according to the flexibility schedule,
- otherwise, declining the flexibility request
   and the forecast engine comprises storage means for storing a set of different subsets of computer-program codes implementing different subsets of algorithms, each subset of algorithms being adapted to a specific type of request, a computer-readable medium with instructions encoded thereon and processors connected to the medium and configured to, when executing the instructions, perform operations of:
- receiving a flexibility request from the booking engine,
- selecting a subset of algorithms adapted to the type of flexibility request and reading the subset of computer-program codes implementing said selected subset of algorithms in said storage means,
- loading said subset of computer-program codes in the computer-readable medium,
- running the loaded subset of computer-program codes,
- delivering to the booking engine a flexibility schedule adapted to the request.

In this text, "flexibility needs" means that over a given time, there is a need to modify the power temporarily. The flexibility can be expressed by time slots or days.

In this text, an "electrical power grid" means an interconnected network for electricity delivery from producers to consumers.

In this text, "distributed energy resources" means electric units - typically in the range of 3 kW to 50 MW - located within the electric distribution system at or near the end user. Examples of distributed energy resources are generation units such as batteries or consumption units such as electric heaters.

In this text, "flexibility request" means that, over a given time, there is a need to change the power provided through the grid. In this text, "flexibility schedule" means a plan of available power at different times of the day for different energy resources. A table usually expresses it. For example, an elementary flexibility schedule table may comprise only a starting date, an ending date and a power value.

According to a particular embodiment of the system, the booking engine is configured to carry out any one or several of these actions:
- send flexibility forecasts to the third party,
- allow the requester to ask to stop the flexibility commands on existing assets urgently,
- allow the requester to bid/nominate assets on relevant markets.

The third party may be the person requesting the flexibility need, but it can also be the market. In this last case, the system of the invention is used to bid in response to market demand.

According to a particular embodiment of the system, the subset of algorithms is a library.

According to a particular embodiment of the system, a decision tree filters out algorithms from the library based on tags used as selection criteria.

Tags can also be used to manage the algorithms as criteria to filter out algorithms, depending on their version.

According to a particular embodiment of the system, the subsets are selected according to the asset type and the flexibility request's purpose.

Tags can be put on asset types and contracts. For instance, if the requestor has signed a contract with the flexibility manager, the contract ID can be used as a tag. The tag helps select the subset of algorithms adapted to manage the appropriate assets, such as electric vehicle charging stations.

According to a particular embodiment of the system, the forecast engine is configured to take into account anyone or several of these parameters:
- market constraints
- unexpected events, such as maintenance, failures, accidents
- risk predefined as acceptable by the requester
- frequency, timestep and horizon of the forecasts can be customised.

According to a particular embodiment of the system, algorithms can improve and auto-define new subsets of algorithms.

According to a particular embodiment of the system, successive versions of the algorithms are stored for later use.

According to a particular embodiment of the system, an instant report is sent back to the booking engine to help discuss with the third party's agent.

The instant report helps the agent with its flexibility activation strategy. The need is analysed and discussed, and the gain can be increased by helping the agent review his request. The third party's agent may not possess as much information as the manager of the resources, such as market prices, fines, and so. Taking benefit from such knowledge may generate more profit than the a priori request of the agent.

According to a particular embodiment of the system, the dispatch engine is configured to dispatch flexibility to a portfolio of individual assets or a subpart.

One advantage is: Dispatching the flexibility to a portfolio of individual assets, or a subpart of it, provides the advantage of taking into account that some of the controlled assets have setpoints, possibly in another physical unit than Watts or Volts. For instance, electrical heaters are usually set at Celcius degrees. Then, a model for conversion can be part of the configuration of the dispatch engine. Another advantage is optimising the portfolio's assets pool by verifying that the expected power is generated. The dispatch engine gathers all the information enabling the power gain check. If all the resources have reacted as expected, the check is positive. If some resources show latency or failure, the delay or failure information is returned to the booking engine. Then, either the delay or failure is overcome, unsolicited resources are involved in replacing the defective ones, or the following availability schedule is adjusted to consider this new data.

According to a particular embodiment of the system, the distributed energy resources are aggregated.

In this text, aggregated means distributed energy resources are brought together to reach a critical power, for instance, more than 100 kW. Aggregated resources behave like one only.

According to a particular embodiment of the system, it comprises a database containing data used by the forecast engine.

According to a particular embodiment of the system, the database is structured so as to store resources' metadata, such as the hierarchy between resources or geographic addresses.

According to a particular embodiment of the system, the database is structured so as to store flexibility constraints such as activation time, delay, maximum tolerated activation, and activation costs.

According to a particular embodiment of the system, the database is structured so as to store dynamic states such as communication status, telemetries, time series, and user needs.

According to a particular embodiment of the system, the database is structured so as to store user-expressed constraints such as electric vehicle mobility, heating schedule, and request constraints retrieved through tailored means.

User-expressed constraints can be collected through apps, such as APIs, which stands for application programming interfaces, or HCl which stands for human-computer interaction. Any other input means can be used.

According to a particular embodiment of the system, the database is structured so as to store unexpected events, such as electricity cuts or information system-related incidents.

According to a particular embodiment of the system, the database is structured so as to store technical, functional, contractual and/or regulatory constraints.

According to a particular embodiment of the system, the database is structured so as to store weather forecasts.

According to a particular embodiment of the system, the database is structured so as to store market prices.

According to a particular embodiment of the system, the database is structured so as to store the CO2 content of the power generated or saved by the resources.

According to a particular embodiment of the system, it comprises a reporting module configured to carry out any one or several of these actions:
- gather all the required data from various other in-house software and databases and produce various aggregated outputs as needed;
- allow retroaction on flexibility commands.

Another object of the invention is a method for responding to flexibility needs to be expressed by third parties regarding an electrical power grid, characterised in that it comprises steps.

### Description of the drawings

The accompanying drawings, which are included to provide a further understanding of the invention and are incorporated in and constitute a part of this description, illustrate embodiments of the invention and, together with the description, explain the invention's characteristics. In the drawings:
Figure 1 shows a system according to one embodiment of the invention, managing a group of electric vehicle charging stations connected to a local electrical power grid.
Figure 2 is the same diagram as in Fig.1, showing the components operating during regular consumption.
Figure 3 is the same diagram as in Figs.1 and 2, showing the components operating during a flexibility period.
Figure 4 is the same diagram as in Figs.1 to 3, showing the components resuming operation to regular consumption after the flexibility period.
Figure 5 shows a system according to another embodiment of the invention, managing a group of individual electric heaters 18 connected to an electrical power grid.
Figure 6 is a diagram of a system according to the invention with a third party expressing a flexibility need and a set of DERs.
Figure 7 is a block diagram of the steps carried out by the booking engine 14.
Figure 8 is a block diagram of the steps carried out by the forecast engine 15.
Figure 9 shows an example of a subset 26 of computer-program codes 27 with their associated types of flexibility requests.
Figure 10 is a block diagram illustrating a selection of a subset 26 of algorithms adapted to a type of flexibility request 30a.

In the figures, each distributed energy resource is considered an electric device. Each one consumes less than 100 kW. An aggregation of distributed energy resources is viewed on the grid as one resource with more than 100 kW of power.

A local electrical power grid, referred to as grid 1, is connected to an overall grid (not represented), also referred to as an electrical network. Grid 1 is considered an asset of the electrical network. The invention is intended for any power grid and enables cutting out any asset to make more power available in response to a flexibility request.

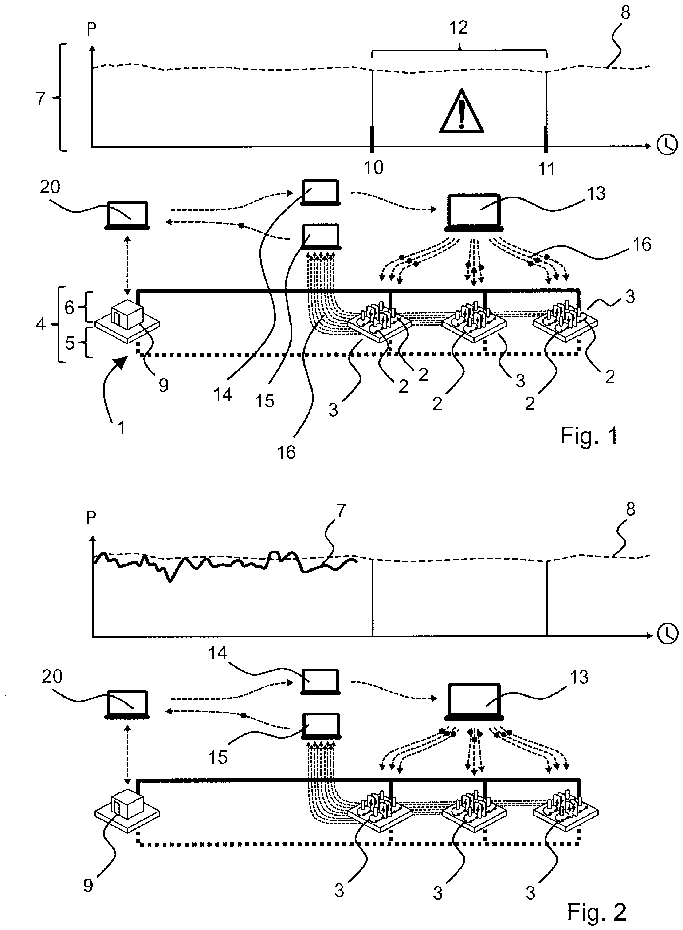

On figure 1, distributed energy resources are made of electric vehicle charging points 2 gathered in charging stations 3. Each charging station is connected to the grid 1. Electrical power is delivered to charging stations 3 through the grid 1. In the diagram, loop 4 illustrates the flow of power. The lower part 5 of loop 4 shows electricity delivered to the charging stations 3. The upper part 6 of loop 4 shows electricity returned by charging stations 3 to the grid 1.

Graph 7 on top shows the planned load profile 8 of the grid, i.e. the consumption capacity, i.e. the minimal power which should be delivered to the grid 1 by a power plant 9 under the regular operation of the power plant 9. In this example, power plant 9 provides a constant load profile to the grid 1.

Third parties express flexibility needs. In the present example, the third party requesting flexibility is the manager of the overall grid.

Peak consumption occurs in a time slot delimited by start time 10 and end time 11. During this peak load 12, the electricity demand is higher on the electrical network. The manager of the overall grid wants to reduce the demand on the grid 1. This decision impacts the operation of electric vehicle charging stations 3. To that purpose, a system is provided for responding to flexibility needs.

The system comprises a dispatch engine 13, a booking engine 14, and a forecast engine 15.

A data collection network 16 connects charging stations 3 to the forecast engine 15 and dispatch engine 13. Therefore, only the data flow is represented schematically on the diagram, not the network itself. Thanks to this data collection network 16, each charging point of charging stations 3 can send data to the forecast engine 15. Data sent by a charging point include, as non-limiting examples:
- An ID.
- A charge status.
- A maximum charge value.
- A start-of-operation date.
- An efficiency.

The data collection network 16 also enables the dispatch engine 13 to send control instructions to each charging point in the charging stations 3.

All the charging points 2 are aggregated to be considered an electrical load resource on the grid 1. However, each one is too small to be considered an energy resource.

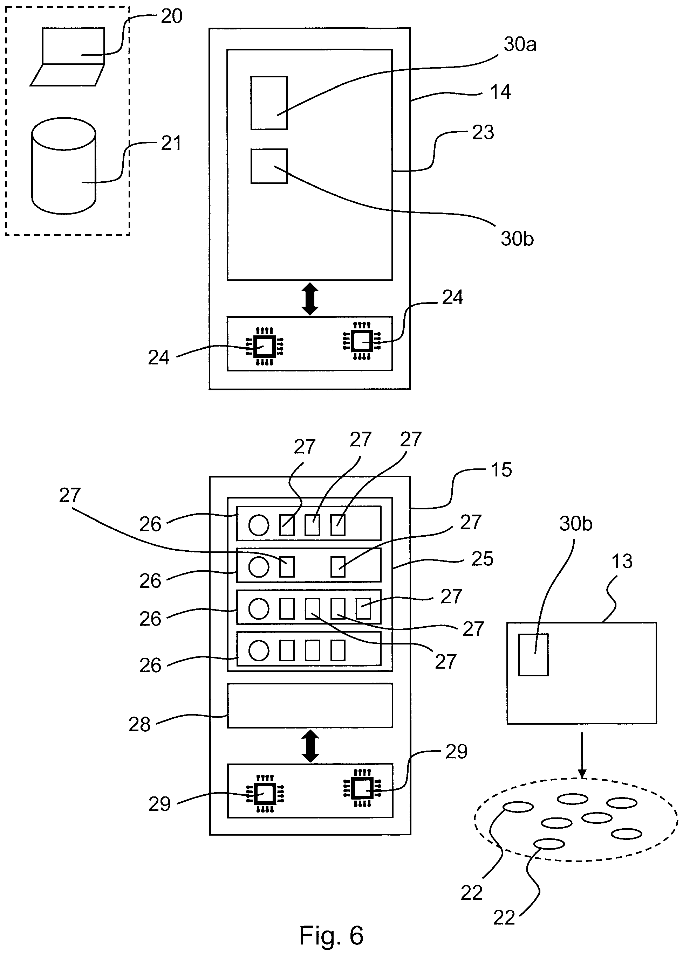

The booking engine 14 and the forecast engine 15 are provided with means to communicate with a third party through either a user graphic interface displayed on a personal computer 20, an API run by a server 21 (see figure 6) or any other adapted interface. In both cases, the communication between the third party and the booking engine/forecast engine makes it possible for the third party to express a flexibility need. In particular, the third party wants to manage better the peak load 12 between start time 10 and end time 11.

As shown in figure 2, during regular operation, power plant 9 delivers electricity to charging stations 3 according to the planned consumption schedule.

Graph 7, with a simple line (the actual electricity load), follows the planned load profile 8.

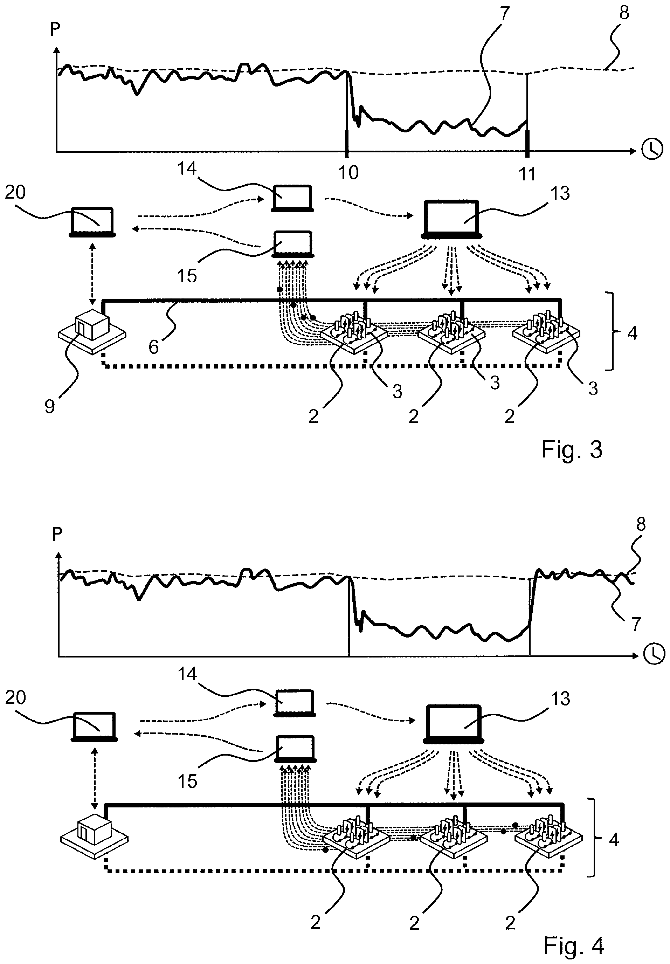

As shown in fig 3, after start time 10, the flexibility need previously expressed by the third party is met by controlling the charging points 2 of the charging stations 3.

The electricity consumption drops in the grid 1. Not only does the consumption of each charging point reduce, but, when possible, some of the charging points 2 send electricity back to power plant 9 through the grid 1 (upper part of loop 4 in the figure).

This flexibility increases the ability of the electrical network to face a more significant demand between start time 10 and end time 11.

From start time 10 to end time 11, dispatch engine 13 controls charging stations 3. Still, charging stations 3 also permanently send data to forecast engine 15, which loop-controls dispatch engine 13 and adjusts the control of charging points 2. For instance, if a local user expresses an urgent need for energy at a particular charging point, said charging point is prioritised. As a result, it consumes energy from the grid 1 despite the current flexibility period.

Another example is the failure of storage means, which were previously requisitioned to deliver energy to the grid 1 during the peak load 12. Forecast engine 15 also adjusts the controlling of charging points 2 to meet the flexibility need previously agreed upon with the third party.

As shown in figure 4, the regular operation of charging stations 3 resumes after the flexibility period, and the planned load schedule is followed.

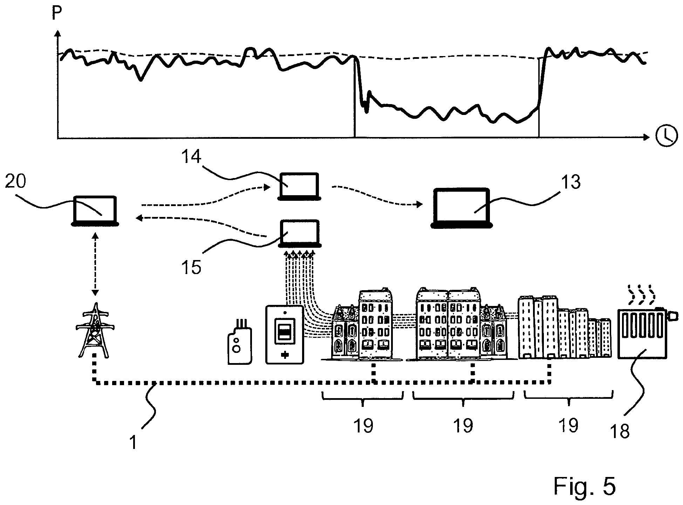

Figure 5 illustrates another example where the distributed energy resources are individual electric heaters 18 (for clarity, only one is represented on the figure, next to the buildings) of individual property heating systems 19.

Before the flexibility need period, electric heaters 18 are controlled to follow the planned load schedule globally. In practice, they operate according to the usual expectations of their owners.

During the flexibility need, most heaters are upheld or shut down so that grid 1 feeding the heaters provides a greater energy capacity to the electrical network. After the flexibility period, normal operations resume, and the heaters function according to the usual expectations of their owners.

Figure 6 represents the internal components of the system according to the invention. Components delimited by broken lines are not parts of the system.

A personal computer 20 and a server 21, belonging to a third party, represent the third party itself. They are not parts of the system.

A broken line circles several bubbles 22. They represent distributed energy resources that do not belong to the system (charging points and heaters in the previous examples).

In this example, the system comprises a booking engine 14, a forecast engine 15 and a dispatch engine 13.

The booking engine 14 comprises a booking computer-readable medium 23. Instructions are encoded on the booking computer-readable medium 23.

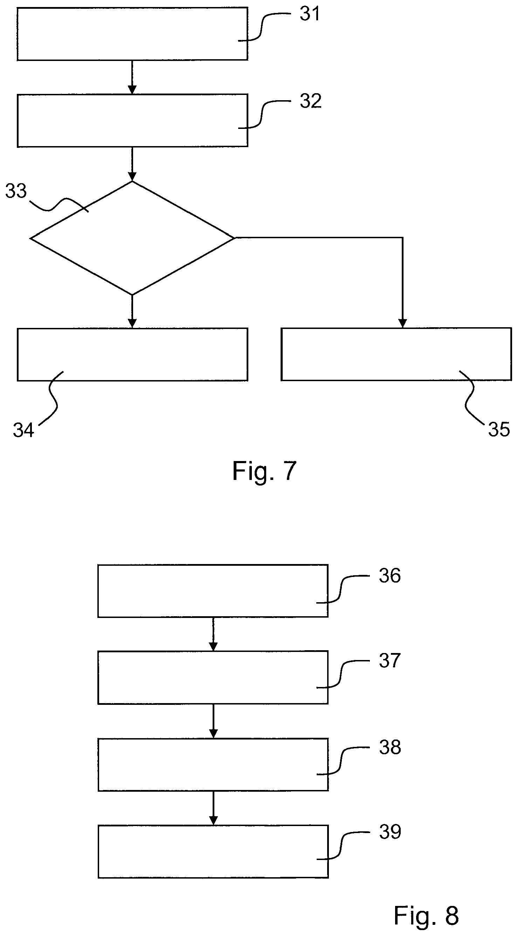

The booking engine 14 also comprises booking processors 24 connected to the booking computer-readable medium 23. The instructions, when executed by the processes, perform operations illustrated in figure 7:
- interfacing with a third-party agent,
- receiving and storing a flexibility request 30a provided by the third party's agent,
- checking the stored flexibility with a flexibility schedule 30b received from the forecast engine 15,
- in case of feasibility, triggering the controlling of the distributed energy resources by the dispatch engine 13 according to the flexibility schedule 30b,
- otherwise, declining the flexibility request.

To that purpose, the forecast engine 15 comprises storage means 25 for storing a set of different subsets 26 of computer-program codes 27. Each one of the computer-program codes 27 implements several subsets of algorithms. Moreover, each subset of algorithms is adapted to a specific type of flexibility request.

The forecast engine 15 also comprises a forecast computer-readable medium 28. The forecast computer-readable medium 28 has instructions included thereon. The forecast engine 15 also comprises forecast processors 29 connected to the forecast computer-readable medium 28 and configured to, when executing the instructions, perform operations illustrated in figure 8:
- receiving a flexibility request 30a from the booking engine 14,
- selecting a subset of algorithms adapted to the type of flexibility request 30a and reading the subset 26 of computer-program codes 27 implementing a set selected subset of algorithms in said storage means 25,
- loading a subset 26 of computer-program codes 27 in the computer-readable,
- running the loaded subset 26 of computer-program codes 27,
- delivering to the booking engine 14 a flexibility schedule 30b adapted to the flexibility request 30a.

In figure 7, the steps carried out by the booking engine 14 are represented by blocks:
- interfacing 31 step: the booking engine 14 exchanges data with a third party's agent. The agent can be a human being or a machine. During this step, the booking engine 14 is interfacing with the third party's agent to help the agent decide which request is the most beneficial to the network,
- booking reception step 32: the booking engine 14 receives an appropriate flexibility request 30a from the third party's agent. The booking engine 14 stores the flexibility request in the booking computer-readable medium 23,
- checking step 33: the booking engine 14 checks the feasibility of the stored flexibility request with a flexibility schedule 30b received from the forecast engine 15. Suppose the flexibility request 30a qualifies compared to the flexibility schedule 30b at triggering step 34. In that case, the booking engine 14 triggers the controlling of the distributed energy resources by the dispatch engine 13 according to the flexibility schedule 30b.
- declination step 35: otherwise, declines the flexibility request 30a.

In figure 8, the steps carried out by the forecast engine 15 are represented by blocks.
- forecast reception step 36: the forecast engine 15 receives the flexibility request 30a from the booking engine 14,
- forecast selection step 37: to better perform the flexibility request treatment, the forecast engine 15 selects a subset of computer-program code, adapted to the type of flexibility request 30a, from the set of available subsets 26 of computer-program codes 27 stored in the storage means 25,
- loading step 38: the forecast engine 15 loads said subset 26 of computer-program codes 27 in the forecast computer-readable medium 28, and runs the loaded subset 26 of computer-program codes 27,
- delivery step 39: the forecast engine 15 delivers to the booking engine 14 the flexibility schedule 30b adapted to the flexibility request 30a, enabling the booking engine 14 to qualify or decline the flexibility request 30a.

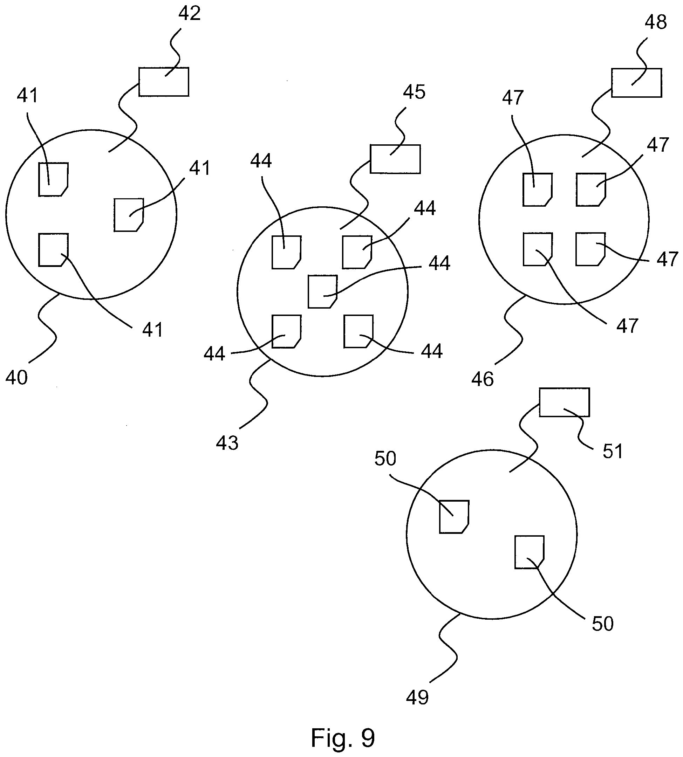

Figure 9 shows fours examples of subsets 26 of computer programs that the invention can handle to manage several types of flexibility request:
- instance_a subset 40 contains three computer programs 41 that can deliver a flexible schedule on a specific market. In addition, an instance_a tag 42 is attached to the subset to make it selectable if a flexibility request of such a type is expressed.
- instance_b subset 43 contains five computer programs 44 that can deliver a flexibility schedule for reducing the imbalance settlement price. An instance_b tag 45 is attached to the subset to make it selectable in case a flexibility request of such a type is expressed.
- instance_c subset 46 contains four computer programs 47 that can deliver a flexibility schedule limiting the asset management to a predetermined type of assets. An instance_c tag 48 is attached to the subset to make it selectable in case a flexibility request of such a type is expressed.
- instance_d subset 49 contains two computer programs 50 that can limit the request to predetermined steering of predetermined assets, such as the known V1G vs V2G for electric vehicle charging stations 3. An instance_d tag 51 is attached to the subset to make it selectable in case a flexibility request of such a type is expressed.

Possible requests are classified and stored in advance associated with the contract ID signed by the requestor.
Only requests the type of which is known and predefined are accepted and can be considered. Last-minute requests are not allowed unless for an urgent stop.

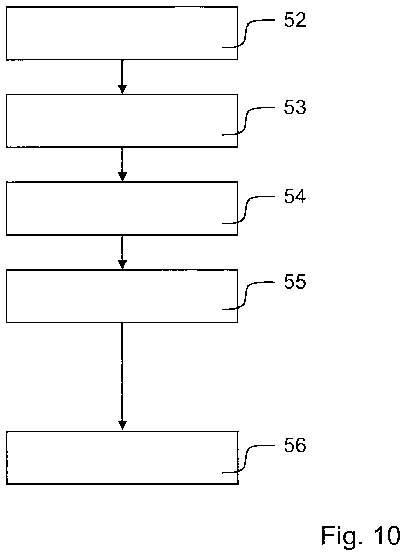

In figure 10, a block diagram shows the steps carried out by the forecast engine 15 when selecting a subset of computer-program codes 27.
- agent step 52: the storage engine reads the agent's identity, which has been previously authenticated.
- contract step 53: the storage engine gets the contracts IDs of contracts that are linked to the agent.
- type step 54: the storage engine gets the type of request from the flexibility request.
- filtering step 55: the storage engine filters out subsets 26 of algorithms meeting criteria set by the two preceding steps.
- pointing step 56: the storage engine delivers a pointer to the appropriate subset of algorithms

In another embodiment, assets of an industrial site are cut out in response to a punctual flexibility need expressed by a plant.

The invention is not limited to disclosed embodiments.

### References used in the drawings

| **Reference** | **Designated part** |
|---|---|
| 1 | Grid |
| 2 | Charging points |
| 3 | Charging stations |
| 4 | Loop |
| 5 | Lower part |
| 6 | Upper part |
| 7 | Graph |
| 8 | Planned load profile |
| 9 | Power plant |
| 10 | Start time |
| 11 | End time |
| 12 | Peak load |
| 13 | Dispatch engine |
| 14 | Booking engine |
| 15 | Forecast engine |
| 16 | Data collection network |
| 17 | Actual electricity load |
| 18 | Electric heaters |
| 19 | Individual property heating systems |
| 20 | Personal computer |
| 21 | Server |
| 22 | Bubbles |
| 23 | Booking computer-readable medium |
| 24 | Booking processors |
| 25 | Storage means |
| 26 | Subset of computer-program codes |
| 27 | Computer-program codes |
| 28 | Forecast computer-readable medium |
| 29 | Forecast processors |
| 30a | Flexibility request |
| 30b | Flexibility schedule |
| 31 | interfacing step |
| 32 | Booking reception step |
| 33 | Checking step |
| 34 | Triggering step |
| 35 | Declination step |
| 36 | Forecast reception step |
| 37 | Forecast selection step |
| 38 | Loading step |
| 39 | Delivery step |
| 40 | Instance_a subset |
| 41 | Three computer programs |
| 42 | Instance_a tag |
| 43 | Instance_b subset |
| 44 | Five computer programs |
| 45 | Instance_b tag |
| 46 | Instance_c subset |
| 47 | Four computer programs |
| 48 | Instance_c tag |
| 49 | Instance_d subset |
| 50 | Two computer programs |
| 51 | Instance_d tag |
| 52 | Agent step |
| 53 | Contract step |
| 54 | Type step |
| 55 | Filtering step |
| 56 | Pointing step |

## Claims

1. **System** for responding to flexibility needs to be expressed by third parties regarding an electrical power grid, having a dispatch engine (13) able to control distributed energy resources according to a flexibility schedule (30b), a booking engine (14), a forecasting engine, all connected for exchanging data,
**characterised in that** the booking engine (14) comprises a computer-readable medium with instructions encoded thereon and processors connected to the medium and configured to, when executing the instructions, perform operations of:
- interfacing with a third party's agent,
- receiving and storing a flexibility request provided by the third party's agent,
- checking the feasibility of the stored flexibility request with a flexibility schedule (30b) received from the forecast engine (15),
- in case of feasibility, triggering the controlling of the distributed energy resources by the dispatch engine (13) according to the flexibility schedule (30b),
- otherwise, declining the flexibility request
and the forecast engine (15) comprises storage means (25) for storing a set of different subsets (26) of computer-program codes (27) implementing different subsets (26) of algorithms, each subset (26) of algorithms being adapted to a specific type of request, a computer-readable medium with instructions encoded thereon and processors connected to the medium and configured to, when executing the instructions, perform operations of:
- receiving a flexibility request from the booking engine (14),
- selecting a subset (26) of algorithms adapted to the type of flexibility request (30a) and reading the subset (26) of computer-program codes (27) implementing said selected subset (26) of algorithms in said storage means (25),
- loading said subset (26) of computer-program codes (27) in the computer-readable medium,
- running the loaded subset (26) of computer-program codes (27),
- delivering to the booking engine (14) a flexibility schedule (30b) adapted to the request.

2. System according to claim 1, wherein the booking engine (14) is configured to carry out any one or several of these actions:
- send flexibility forecasts to the third party,
- allow the requester to ask to stop the flexibility commands on existing assets urgently,
- allow the requester to bid/nominate assets on relevant markets.

3. System according to any one of claims 1 and 2, wherein the subset (26) of algorithms is a library.

4. System according to claim 3, wherein a decision tree filters out algorithms from the library based on tags used as selection criteria.

5. System according to any one of claims 3 and 4, wherein the subsets (26) are selected according to the asset type of asset and the flexibility request purpose.

6. System according to any one of claims 1, 2, 3, 4 and 5, wherein the forecast engine (15) is configured to take into account anyone or several of these parameters:
- market constraints
- unexpected events, such as maintenance, failures, accidents
- risk predefined as acceptable by the requester
- frequency, timestep and horizon of the forecasts can be customized.

7. System according to any one of claims 1, 2, 3, 4, 5 and 6, wherein successive versions of the algorithms are stored for later use.

8. System according to any one of claims 1, 2, 3, 4, 5, 6 and 7, wherein an instant reporting is sent back to the booking engine (14) to help discuss with the third party's agent.

9. System according to any one of claims 1, 2, 3, 4, 5, 6, 7 and 8, wherein the dispatch engine (13) is configured to dispatch the flexibility to a portfolio of individual assets or a subpart of it.

10. System according to any one of claims 1, 2, 3, 4, 5, 6, 7, 8 and 9, comprising a database containing data used by the forecast engine (15).

11. System according to claim 10, wherein the database is structured so as to store:
- resources' metadata such as hierarchy between resources or geographic addresses, or
- flexibility constraints such as activation time, delay, maximum tolerated activation, and activation costs, or
- dynamic states such as communication status, telemetries, time series, and user needs, or
- user-expressed constraints such as electric vehicle mobility, heating schedule, and request constraints retrieved through tailored means, or
- unexpected events, such as electricity cuts or information system-related incidents, or
- technical, functional, contractual and/or regulatory constraints, or
- weather forecast, or
- market price, or
- CO2 content of the power generated or saved by the resources.

12. System according to any one of claims 1, 2, 3, 4, 5, 6, 7, 8, 9, 10 and 11, wherein comprises a reporting module configured to carry out any one or several of these actions:
- gather all the required data from various other in-house software and databases and produce various aggregated outputs as needed;
- allow retroaction on flexibility commands.

13. **Method** for responding to flexibility needs to be expressed by third parties regarding an electrical power grid, **characterised in that** it comprises steps defined in any one of claims 1, 2, 3, 4, 5, 6, 7, 8, 9, 10, 11 and 12.
